# FASCICULE DE BREVET EUROPEEN

(11) **EP 2 795 221 B1**
(45) Date de publication et mention de la délivrance du brevet: **12.09.2018**
(21) Numéro de dépôt: 12809780.5
(22) Date de dépôt: 18.12.2012
(51) Int. Cl.: F28D 9/00, F28F 9/02, F02B 29/04

(54) **ECHANGEUR DE CHALEUR, ENSEMBLE D'UN TEL ÉCHANGEUR ET D'UNE OU DE BOÎTES COLLECTRICES, MODULE D'ADMISSION D'AIR COMPRENANT UN TEL ENSEMBLE**
WÄRMETAUSCHER, ANORDNUNG AUS EINEM SOLCHEN WÄRMETAUSCHER UND EINER ODER MEHRERER KOLLEKTORKÄSTEN SOWIE LUFTANSAUGMODUL MIT EINER DERARTIGEN ANORDNUNG
HEAT EXCHANGER, ASSEMBLY OF SUCH AN EXCHANGER AND ONE OR MORE COLLECTOR BOXES, AND AIR INTAKE MODULE INCLUDING SUCH AN ASSEMBLY

(30) Priorité: 20.12.2011 FR 1162062
(43) Date de publication de la demande: 29.10.2014
(73) Titulaire: Valeo Systemes Thermiques, 78320 Le Mesnil-Saint-Denis Cedex (FR)
(72) Inventeur: ODILLARD, Laurent, F-72390 Le Luart (FR); GALLAND, Jean-Pierre, F-78690 Les Essarts-le-Roi (FR)
(74) Mandataire: Metz, Gaëlle
(86) Numéro de dépôt international: PCT/EP2012/075993
(87) Numéro de publication internationale: WO 2013/092613

(56) Documents cités:
- WO-A1-2010/003807
- DE-A1-102008 027 842
- DE-A1-102009 012 509
- FR-A- 2 855 605
- FR-A1- 2 251 794

## Description

L'invention concerne un échangeur de chaleur, notamment pour véhicule automobile, un ensemble d'un tel échangeur et d'une ou de boîtes collectrices ainsi qu'un module d'admission d'air comprenant un tel ensemble. L'invention concerne, en particulier, un échangeur conforme au préambule de la revendication 1. Un tel échangeur est connu du document FR 2 855 605. Dans ce domaine, il est connu des échangeurs, dits refroidisseurs d'air de suralimentation, permettant un échange de chaleur entre de l'air de suralimentation, destiné à alimenter le moteur du véhicule, et un liquide de refroidissement. Ils comprennent un faisceau d'échange de chaleur constitué d'un empilement de plaques déterminant entre elles des canaux de circulation alternés pour l'air de suralimentation et pour le liquide de refroidissement. De tels échangeurs présentent l'intérêt de pouvoir être disposés librement sous le capot, notamment à proximité du moteur du véhicule, contrairement aux échangeurs d'air de suralimentation refroidi à l'aide d'un faisceau d'air extérieur qui nécessitent d'être disposés en face avant du véhicule ou à tout le moins à proximité d'une arrivée d'air.

Dans de tels échangeurs, le faisceau est logé dans un carter métallique sur lequel sont rapportés des boîtes collectrices permettant de guider l'air de suralimentation en entrée et en sortie du faisceau d'échange de chaleur.

Il est en particulier connu de visser les boîtes collectrices sur le carter. Une telle solution est cependant onéreuse et complexe à mettre en oeuvre, notamment en raison des difficultés d'étanchéité qu'elle implique. On peut aussi noter que les opérations de vissage sont difficiles à réaliser lorsqu'il s'agit de fixer l'échangeur à un boîtier d'admission d'air du moteur en raison de l'environnement encombré dans lequel se trouve alors l'échangeur.

Il est également connu de souder lesdites boîtes sur ledit carter mais une telle solution s'avère finalement onéreuse et complexe à mettre en oeuvre elle aussi, notamment en raison des difficultés rencontrées pour assurer la fiabilité de la soudure. Elle limite de plus les possibilités en nécessitant l'emploi de boîtes collectrices métalliques.

On pourrait par ailleurs envisager de braser lesdites boîtes collectrices sur le carter simultanément à un brasage du reste de l'échangeur. Une telle solution facilite la fabrication mais présente également l'inconvénient de réduire la liberté de conception des boîtes collectrices qui doivent alors être configurées de façon à être conformes aux contraintes de brasage. Comme dans le cas de la soudure, les matériaux devront ainsi pouvoir résister à de hautes températures, ce qui élimine les boîtes collectrices en matériaux plastiques. En outre, contrairement aux solutions précédentes dans lesquels on peut employer des boîtes collectrices moulées présentant des formes complexes permettant de définir des nervures de renforcement ou de nombreuses interfaces telles que des brides d'accrochage et/ou des tubulures de connexion de fluide, les formes possibles sont dans ce cas réduites.

Il est par ailleurs connu de sertir des boîtes collectrices sur des collecteurs dans des échangeurs présentant une configuration de faisceau à tubes parallèles pour la circulation de l'air de suralimentation. Une telle configuration de faisceau présente cependant des inconvénients. Elle nécessite en particulier des collecteurs de forme complexe présentant des orifices à travers lesquels les tubes débouchent pour communiquer avec les boîtes collectrices.

L'invention a pour but d'améliorer la situation et propose à cette fin un échangeur de chaleur, notamment pour véhicule automobile, comprenant un faisceau d'échange de chaleur, formé d'un empilement de plaques permettant la circulation d'un premier et d'un second fluide, et un carter à l'intérieur duquel ledit faisceau est logé, ledit échangeur comprenant en outre un collecteur, fixé audit carter, ledit échangeur étant configuré pour permettre le sertissage d'un pied de boîte collectrice entre ledit collecteur et ledit carter.

On propose ainsi, selon l'invention, une solution dans laquelle le faisceau est du type à plaques empilées et dans laquelle les boîtes collectrices pourront être serties sur le carter. On propose plus précisément pour cela d'employer une pièce rapportée, à savoir le collecteur, et une mode spécifique d'accrochage des boîtes collectrices sur l'échangeur, à savoir par prise en sandwich du pied de boîte entre ledit carter et ladite pièce.

Grâce au sertissage, l'invention permet de disposer d'une solution peu onéreuse et facile à mettre en oeuvre. Elle permet en outre l'utilisation de boîtes collectrices moulées, c'est-à-dire, de boîtes collectrices dont la forme et les matériaux pourront être librement choisis.

L'invention pourra présenter les caractéristiques complémentaires suivantes, prises ensemble ou séparément :
- le collecteur forme un cadre et présente ouverture de passage pour le premier fluide à l'intérieur de cadre,
- ledit collecteur comprend une gorge permettant de loger un joint d'étanchéité,
- ledit carter comprend un épaulement au niveau duquel ladite gorge est assujettie,
- ledit épaulement est prolongé par un bord de sertissage,
- le bord de sertissage comprend des dents de sertissage,
- ledit bord de sertissage comprend des moyens d'encliquetage sur le carter,
- ledit carter comprend un logement pour le faisceau et une portion de raccordement entre ledit logement et ledit épaulement.

Selon un aspect particulièrement avantageux de l'invention, ledit échangeur comprendre par ailleurs des moyens de renfort permettant d'améliorer la résistance dudit carter contre les efforts de sertissage.

On diminue de la sorte la déformation du carter sous l'effet des efforts de sertissage et on réduit les risques de détérioration du faisceau. On peut à ce sujet remarquer que, contrairement aux échangeurs à tubes de l'état de l'art dans lesquels les tubes contribuent à la résistance aux efforts de sertissage en débouchant à travers le collecteur, le problème est ici d'autant plus aigu que le faisceau, qui est du type à plaques empilées, n'offre pas un tel renfort.

L'invention pourra présenter en ce sens différentes caractéristiques, prises ensemble ou séparément :
- l'échangeur comprend une poutre sur laquelle ladite gorge prend appui, ladite poutre reposant sur le carter au niveau de ladite portion de raccordement,
- ladite poutre comprend un bord tombé du collecteur, reliant ladite gorge à ladite portion de raccordement,
- ledit collecteur présente une section en forme de S comprenant une première et une seconde boucle en continuité de matière l'une avec l'autre, ladite gorge formant la première boucle du S et ledit bord tombé formant la seconde boucle dudit S,
- ladite poutre comprend en outre une portion formée par un coude situé entre ledit épaulement et ladite portion de raccordement.

Selon un autre aspect de l'invention, le collecteur comprend des barrettes de renfort mécanique.

Selon un autre aspect encore, le collecteur comprend un écran déviant le flux du premier fluide en direction d'une zone d'échange de chaleur du faisceau.

Selon un autre aspect encore, le collecteur forme un cadre comprenant des angles et ledit bord tombé est interrompu au niveau de tout ou partie desdits angles.

L'invention concerne aussi un ensemble d'un échangeur tel que décrit plus haut et d'une boîte collectrice d'entrée et/ou d'une boîte collectrice de sortie, serties dans ledit collecteur. L'invention concerne encore un module d'admission d'air comprenant un tel ensemble.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue en perspective illustrant un carter et un collecteur d'un échangeur de chaleur conforme à l'invention ainsi que des boîtes collectrices destinées à être montés sur ledit échangeur;
- la figure 2 est une vue en perspective partielle d'un module d'admission d'air conforme à l'invention ;
- la figure 3 est une vue en perspective illustrant un faisceau d'échange de chaleur de l'échangeur de chaleur de la figure 1 ou du module d'admission d'air de la figure 2 ;
- la figure 4 reprend partiellement la figure 2, le module étant illustré selon un plan de coupe longitudinal, sans son faisceau d'échange de chaleur ;
- la figure 5 illustre un détail repéré V à la figure 4 ;
- la figure 6 illustre en perspective le collecteur du module de la figure 2 ;
- la figure 7 illustre un détail repéré VII à la figure 6 ;
- la figure 8 illustre une variante de réalisation du collecteur de la figure 6.

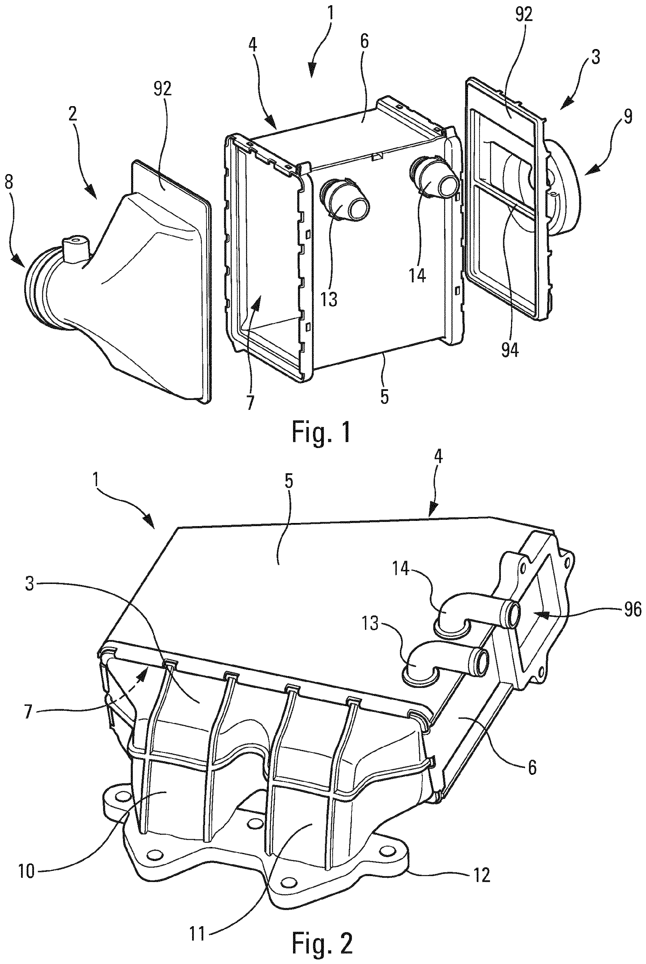

Comme illustré aux figures 1 et 2, l'invention concerne un échangeur de chaleur 1, notamment pour véhicule automobile, auquel une boîte collectrice d'entrée 2 et/ou une boîte collectrice de sortie 3, permettant la circulation d'un premier fluide à travers l'échangeur, pourront être rapportées.

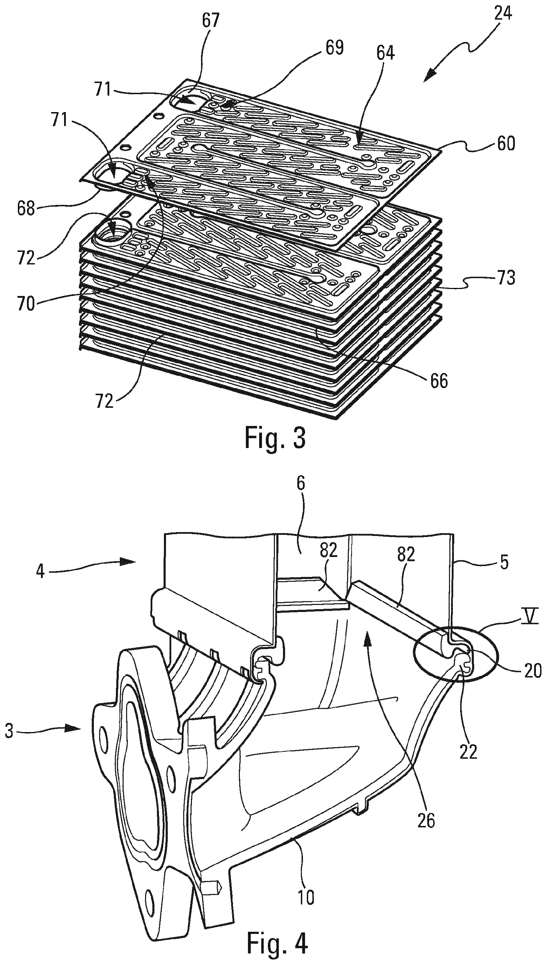

Ledit échangeur 1 comprend un carter 4 à l'intérieur duquel un faisceau d'échange de chaleur entre le premier et un second fluide est logé. Il est à noter que, par souci de simplification des dessins, ledit faisceau n'est pas illustré à la figure 1. Il n'est pas non plus visible à la figure 2 et sera détaillé à la figure 3. Ledit premier fluide pourra être de l'air de suralimentation. Ledit second fluide pourra être un liquide de refroidissement.

Le carter 4 présente ici sensiblement la forme d'un parallélépipède rectangle. Il comprend deux parois longitudinales 5, opposées entre elles, et deux parois latérales 6, opposées entre elles, et reliant les deux parois longitudinales 5 entre elles. Le carter 4 laisse ainsi libre deux faces restantes du parallélépipède, opposées entre elles et appelées première et deuxième faces libres 7. La boîte collectrice d'entrée 2 du premier fluide est raccordée à la première face libre 7 du carter 4. Le carter 4 est raccordé à la boîte collectrice de sortie 3 au niveau de sa deuxième face libre. Ainsi le premier fluide traverse le carter 4 de part en part depuis la boîte collectrice d'entrée 2 jusqu'à la boîte de collectrice de sortie 3.

Chacune des parois 5, 6 du carter est ici constituée d'une plaque, lesdites plaques étant assujetties les unes aux autres, notamment par brasage, pour former ledit carter 4.

Selon le mode de réalisation de la figure 1, l'ensemble de l'échangeur 1 et des boîtes collectrices 2, 3 forme un échangeur indépendant dans lequel la boîte d'entrée 2 et la boîte de sortie 3 sont destinées à être raccordées à des durits de circulation du premier fluide, non illustrées, par l'intermédiaire d'orifices d'entrée 8 et de sortie 9 Le premier fluide circule ainsi à travers la boîte collectrice d'entrée 2, l'échangeur 1 et la boîte collectrice de sortie 3.

Selon le mode de réalisation de la figure 2, il s'agit d'un module d'admission d'air dans lequel la boîte de sortie 3 est un répartiteur d'air, configurée pour être rapportée sur une culasse de moteur, non représenté, de sorte à distribuer l'air vers des pipes d'admission de la culasse, notamment par l'intermédiaire de deux conduits 10, 11 définis par ledit répartiteur 3. Ce dernier comprend, par exemple, une semelle 12 de fixation à la culasse, semelle 12 au niveau de laquelle lesdits conduits 10, 11 débouchent. Le premier fluide circule ainsi à travers la boîte collectrice d'entrée 2, l'échangeur 1 et les conduits 10, 11 du répartiteur d'air 3.

Comme illustré à la figure 3, le faisceau 24 est formé d'un empilement de plaques 60 permettant la circulation du premier et du second fluide de façon à assurer un échange de chaleur entre lesdits fluides. Les plaques 60 sont groupées par paires et définissent chacune un circuit 64 de circulation du second fluide. De la sorte, le circuit 64 d'une plaque supérieure et d'une plaque inférieure d'une même paire de plaques se complètent pour constituer un conduit de circulation du second fluide.

Les plaques 60 ont, par exemple, la forme générale d'un rectangle allongé de dimensions juste inférieures aux dimensions des faces longitudinales 5 du carter. Les plaques 60 ont ainsi deux grands côtés 72 et deux petits côtés 73, chacune des plaques comportant deux bossages, dit premier et deuxième bossage 67, 68, ici situés le long d'un des petits côtés 73 desdites plaques 60. Le premier bossage 67 présente une entrée 69 du circuit 64 de circulation du premier fluide et le deuxième bossage 68 présente une sortie 70 du circuit 64 de circulation du second fluide. Des circuits 66 pour la circulation du premier fluide sont prévus entre deux plaques 60 en vis-à-vis de deux paires de plaques 60 adjacentes. Ils pourront être munis de perturbateurs, non illustrés.

Afin de permettre la communication du premier fluide entre les différentes paires de plaques et donc entre les différents circuits 64 de circulation du second fluide, les bossages 67, 68 sont ici percés d'un orifice 71 de passage du second fluide et sont en contact avec les bossages 67, 68 d'une plaque 60 adjacente pour former respectivement une volume collecteur d'entrée, non visible, et un volume collecteur de sortie 72 pour ledit second fluide. Le volume collecteur d'entrée débouche, par exemple, dans une première tubulure 13 du carter 4 et le volume collecteur de sortie débouche, par exemple, dans une seconde tubulure 14 du carter 4 (figures 1 et 2).

Autrement dit, le second fluide pénètre dans le faisceau par la première tubulure 13 puis est réparti entre les plaques 60 dans les circuits 64 de circulation du second fluide par le volume collecteur d'entrée. Il s'écoule dans les circuits 64 de circulation du second fluide depuis leurs entrées 69 jusqu'au à leurs sorties 70 où il pénètre dans le volume collecteur de sortie 72. Il sort alors du faisceau par la seconde tubulure 14.

Lesdits plaques 60 sont assujetties au carter 4, notamment brasées, le long des petits côtés 73 desdites plaques 60 qui sont au contact des parois latérales 6 dudit carter 4.

Comme illustré à la figure 4, ledit échangeur 1 comprend en outre un collecteur 20, fixé audit carter 4, et ledit échangeur 1 est configuré pour permettre le sertissage d'un pied 22 de boîte collectrice entre ledit collecteur 20 et ledit carter 4. Bien qu'à la figure 4, la boîte sertie soit la boîte collectrice de sortie ou répartiteur 3 du module d'admission d'air illustré, l'invention s'applique tout aussi bien au sertissage d'une boîte collectrice d'entrée 2 et/ou de sortie 3, comme à la figure1.

Grâce à l'invention, on peut ainsi fixer des boîtes collectrices d'entrée et/ou de sortie à l'échangeur 1 par une solution économique et simple à mettre à oeuvre, à savoir le sertissage. On disposera également d'une plus grande possibilité de choix de forme et de matériaux pour lesdites boîtes collectrices. Lesdites boîtes collectrices pourront de la sorte être en matière plastique, en métal et/ou autres.

Comme ledit carter 4 et ledit faisceau, non illustré à la figure 4, ledit collecteur 20 est, par exemple, en métal, notamment aluminium et/ou alliage d'aluminium. Il pourra être brasé audit carter 4 simultanément au brasage des différentes plaques 5, 6 qui le constituent. Ainsi, on pourra braser simultanément ledit carter 4, ledit faisceau et ledit collecteur 20.

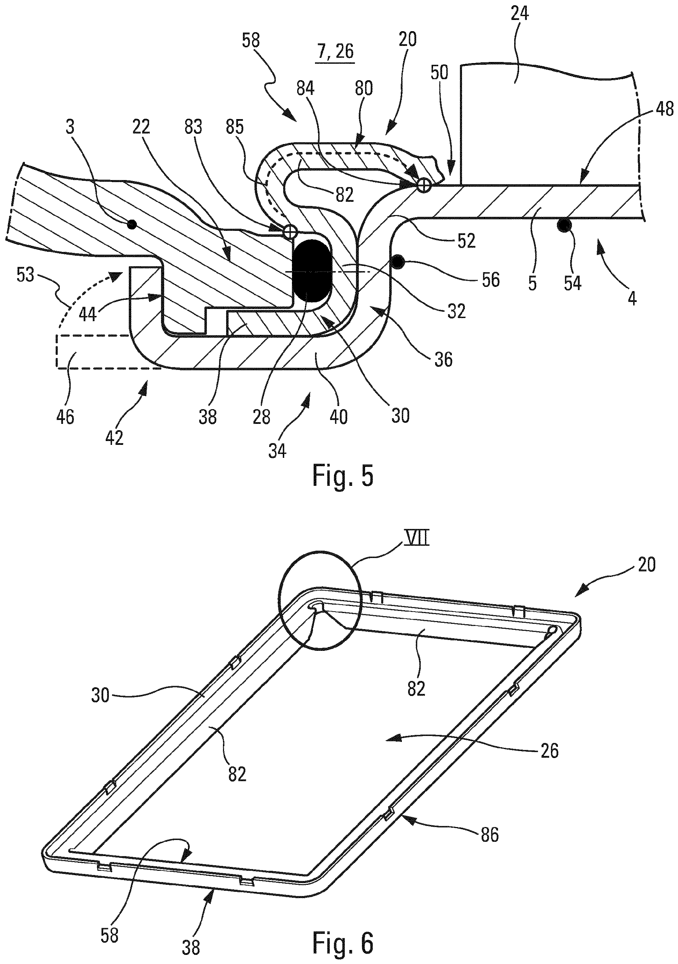

Ledit collecteur 20 forme, par exemple, un cadre (visible en entier aux figures 6 à 8) et présente une ouverture 26 de passage pour le premier fluide à l'intérieur du cadre. Autrement dit, le flux de premier fluide passant à travers l'ouverture 26 alimente l'intégralité du faisceau.

Ledit collecteur 20 pourra présenter une forme en correspondance avec une section droite du carter 4 de sorte que le collecteur 20 est inséré dans ledit carter 4. Ladite forme du collecteur 20 et ladite section droite du carter 4 sont ici rectangulaires.

Comme cela apparaît mieux à la figure 5, on constate que le faisceau, illustré schématiquement 24 à cette figure, est de préférence situé à distance du collecteur 20. On constate par ailleurs que le sertissage pourra non seulement permettre le maintien de la boîte collectrice 3 sur l'échangeur 1 mais également la compression d'un joint 28 permet d'assurer l'étanchéité entre les boîtes collectrices et l'échangeur 1. Il s'agit, notamment, d'un joint élastomère.

Pour cela, ledit collecteur 20 comprend ici une gorge 30 permettant de loger ledit joint 28. Le sertissage permet alors de comprimer ledit joint 28 entre le pied de boîte 22 et un fond 32 de ladite gorge 30. Ledit carter 4 comprend, par exemple, un épaulement 34 au niveau duquel ladite gorge 30 est assujettie.

Ledit épaulement 34 est, par exemple, en forme de L. Une des branches du L, dite branche transversale 36, est reliée à la partie du carter 4 où le faisceau 24 est fixé. Ladite gorge 30 est ici en forme de U. Elle est fixée par son fond 32 à ladite branche transversale 36 de l'épaulement 34 du carter ainsi que par l'un 38 de ses côtés, à l'autre branche du L, dite branche longitudinale 40. Ledit fond 32 de la gorge 30 et ladite branche transversale 36 de l'épaulement 34 pourront être parallèles entre eux, de même ledit côté 38 de la gorge 30 et la branche longitudinale 40 de l'épaulement 34.

Ledit épaulement 34 pourra être prolongé par un bord de sertissage 42, permettant de bloquer le pied de boîte 22 au niveau d'un épaulement 44 prévue sur celle-ci. Ledit bord de sertissage 42 comprend ici pour cela des dents de sertissage 46. Autrement dit, ledit bord de sertissage 42 présente un profil crénelé.

Ledit carter 4 comprend ici un logement 48 pour le faisceau 24 et une portion 50 de raccordement entre ledit logement 48 et ledit épaulement 34. Ladite portion de raccordement 50 présente, par exemple, la même section que le logement 48 et elle est liée à ce dernier, notamment par continuité de matière, pour guider le premier fluide du collecteur 20 au faisceau 24. Elle est ici reliée à l'épaulement 34 par une portion coudée 52 du carter 4.

A la figure 5, la dent de sertissage 46 est illustrée en position avant sertissage, en pointillés, et en position après sertissage, en trait plein. Le passage de la position avant sertissage à la position après sertissage est illustrée par la flèche repérée 53. On comprend mieux de la sorte les efforts que le sertissage exerce sur le carter 4. A ce sujet, on a représenté de façon schématique des butées 54, 56 de l'outillage de sertissage. Une première 54 de ces butées se trouve contre le carter 4 au niveau du faisceau 24. Une autre de ces butées se trouve contre le carter 4 au niveau de la gorge 30. Lors du sertissage, l'effort de compression du joint est transmis au carter 4 qui risque de se déformer, ce qui peut aller jusqu'à endommager le faisceau 24.

Pour diminuer un tel risque l'échangeur selon l'invention comprendra avantageusement des moyens de renfort 58 permettant d'améliorer la résistance dudit carter 4 contre les efforts de sertissage. Il s'agit en particulier d'une poutre 80 sur laquelle ladite gorge 30 prend appui. Ladite poutre 80 repose par ailleurs sur le carter 4 au niveau de ladite portion de raccordement 50.

Ladite poutre 80 comprend, par exemple, un bord tombé 82 du collecteur 20, reliant ladite gorge 30 à ladite portion de raccordement 50 du carter 4, notamment au niveau d'une extrémité distale 84 dudit bord tombé 82. Ladite extrémité distale 84 est ici assujettie, notamment brasée, audit carter 4. Il pourra s'agir d'un contact sensiblement linéique, assuré sur le pourtour du carter 4.

Ledit collecteur 20 présente, par exemple, une section en forme de S comprenant une première et une seconde boucle en continuité de matière l'une avec l'autre. Lesdites première et seconde boucles correspondent respectivement à la boucle inférieure et à la boucle supérieure à la figure 5. Ladite gorge 30 forme la première boucle du S et ledit bord tombé 82 forme la seconde boucle dudit S. Ladite poutre 80 pourra en outre comprendre la portion 52 formée par le coude situé entre ledit épaulement 34 et ladite portion de raccordement 50 du carter 4. Autrement dit, la section droite de la poutre 80 est définie par la seconde boucle du S du collecteur 20 et la portion coudée 52 du carter 4, reliant l'épaulement 34 et la zone de raccordement 50. L'effort de sertissage est ici transmis par la seconde boucle du point repéré 83 au l'extrémité distale 84 du bord tombé 82, comme schématisé par la flèche en pointillés repérée 85.

Ledit collecteur 20 est obtenu, par exemple, par pliage ou emboutissage d'une feuille de matière.

Si l'on se reporte de nouveau à la figure 4, on constate que, dans le mode de réalisation illustré, chaque plaque du carter 4 présente ledit bord tombé 82.

Comme illustré à la figure 6, ledit collecteur 20 pourra comporter des moyens de pré positionnement sur le carter 4. Il s'agit, par exemple, d'éléments d'encliquetage 86, situés sur le côté 38 de la gorge 30.

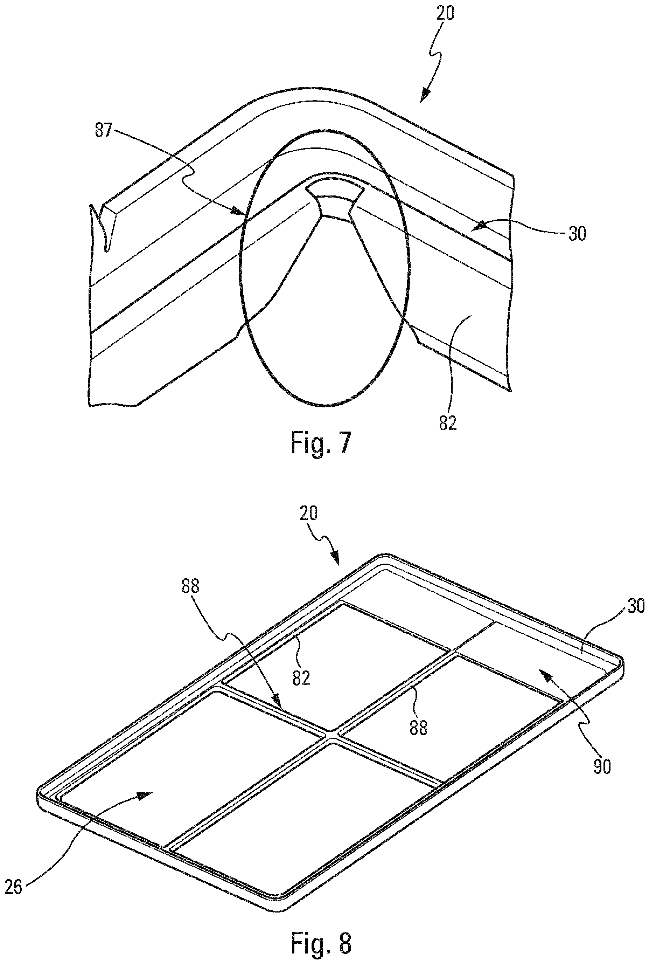

Comme illustré à la figure 7, le cadre formé par le collecteur 20 comprend des angles et ledit bord tombé 82 pourra être interrompu au niveau de tout ou partie desdits angles, comme indiqué par la zone repérée 87.

Comme illustré à la figure 8, selon une variante de réalisation, le collecteur 20 comprend 20 des barrettes 88 de renfort mécanique. Elles sont positionnées à travers l'ouverture 26 de passage du premier fluide et relient des bords opposés dudit cadre. Elles sont ici en forme de croix.

Selon un autre aspect de l'invention, le collecteur 20 pourra aussi comprendre un écran 90 déviant le flux du premier fluide en direction d'une zone d'échange de chaleur du faisceau. Ledit écran est situé, par exemple, en vis-à-vis des bossages 67, 68 des plaques 60. En effet, ces derniers sont situés dans une zone du faisceau où il y a peu ou pas d'échange thermique. L'écran 90 dirige de la sorte le premier fluide vers la zone du faisceau 24 munie de perturbateurs dans les canaux 66 de passage dudit premier fluide.

Si l'on reporte de nouveau à la figure 1, on constate que les boîtes collectrices d'entrée 2 et/ou de sortie 3 sont munis d'un plat 92 destiné à venir en correspondance dudit écran 90 du collecteur 20. Elles pourront elles aussi être muni d'une ou plusieurs barrettes de renfort 94, en particulier au niveau de leur embouchure d'interface avec l'échangeur 1.

A la figure 2, seule la boîte de sortie ou répartiteur 3 est sertie. La boîte d'entrée 2 est réalisée par un couvercle, non-visible et des prolongements des parois du carter 4 définissant une entrée 96, ici latérale, pour le premier fluide.

## Revendications

1. Echangeur de chaleur, notamment pour véhicule automobile, comprenant un faisceau (24) d'échange de chaleur, formé d'un empilement de plaques (60) permettant la circulation d'un premier et d'un second fluide, et un carter (4) à l'intérieur duquel ledit faisceau (24) est logé, **caractérisé en ce que** ledit échangeur comprend en outre un collecteur (20), fixé audit carter (4), ledit échangeur étant configuré pour permettre le sertissage d'un pied (22) de boîte collectrice (2, 3) entre ledit collecteur (20) et ledit carter (4).

2. Echangeur selon la revendication 1 dans lequel ledit collecteur (20) comprend une gorge (30) permettant de loger un joint d'étanchéité (28).

3. Echangeur selon la revendication 2 dans lequel ledit carter (4) comprend un épaulement (34) au niveau duquel ladite gorge (30) est assujettie.

4. Echangeur selon la revendication 3 dans lequel ledit épaulement (34) est prolongé par un bord de sertissage (42).

5. Echangeur selon l'une quelconque des revendications 3 ou 4 dans lequel ledit carter (4) comprend un logement (48) pour le faisceau et une portion de raccordement (50) entre ledit logement (48) et ledit épaulement (34).

6. Echangeur selon l'une quelconque des revendications précédentes comprenant des moyens (58) de renfort permettant d'améliorer la résistance dudit carter (4) contre les efforts de sertissage.

7. Echangeur selon la revendication 5 comprenant une poutre (80) sur laquelle ladite gorge (30) prend appui, ladite poutre (80) reposant sur le carter (4) au niveau de ladite portion de raccordement (50).

8. Echangeur selon la revendication 7 dans lequel ladite poutre (80) comprend un bord tombé (82) du collecteur (20), reliant ladite gorge (30) à ladite portion de raccordement (50).

9. Echangeur selon la revendication 8 dans lequel ledit collecteur (20) présente une section en forme de S comprenant une première et une seconde boucle en continuité de matière l'une avec l'autre, ladite gorge (30) formant la première boucle du S et ledit bord tombé (82) formant la seconde boucle dudit S.

10. Echangeur selon l'une quelconque des revendications 7 à 9 dans lequel ladite poutre (80) comprend en outre une portion (52) formée par un coude situé entre ledit épaulement (34) et ladite portion de raccordement (50).

11. Echangeur selon l'une quelconque des revendications précédentes dans lequel le collecteur (20) comprend des barrettes (88) de renfort mécanique.

12. Echangeur selon l'une quelconque des revendications précédentes dans lequel le collecteur (20) comprend un écran (90) déviant le flux du premier fluide en direction d'une zone d'échange de chaleur du faisceau (24).

13. Echangeur selon l'une quelconque des revendications 8 à 12 dans lequel le collecteur (20) forme un cadre comprenant des angles et ledit bord tombé est interrompu au niveau de tout ou partie desdits angles.

14. Ensemble d'un échangeur (1) selon l'une quelconque des revendications précédentes et d'une boîte collectrice d'entrée (2) et/ou d'une boîte collectrice de sortie (3), serties dans ledit collecteur (20).

15. Module d'admission d'air comprenant un ensemble selon la revendication 14.

## Patentansprüche

1. Wärmetauscher, insbesondere für ein Kraftfahrzeug, umfassend ein Wärmetauschbündel (24), das von einem Plattenstapel (60) gebildet ist, der die Zirkulation eines ersten und eines zweiten Fluids ermöglicht, und ein Gehäuse (4), in dem das Bündel (24) angeordnet ist, **dadurch gekennzeichnet, dass** der Wärmetauscher ferner einen Kollektor (20) umfasst, der am Gehäuse (4) befestigt ist, wobei der Wärmetauscher eingerichtet ist, um das Einsetzen eines Fußes (22) eines Kollektorkastens (2, 3) zwischen dem Kollektor (20) und dem Gehäuse (4) zu ermöglichen.

2. Wärmetauscher nach Anspruch 1, bei dem der Kollektor (20) eine Rille (30) umfasst, die es ermöglicht, eine Dichtung (28) aufnehmen.

3. Wärmetauscher nach Anspruch 2, bei dem das Gehäuse (4) einen Absatz (34) umfasst, in dessen Bereich die Rille (30) angeordnet ist.

4. Wärmetauscher nach Anspruch 3, bei dem der Absatz (34) durch einen Einsetzrand (42) verlängert ist.

5. Wärmetauscher nach einem der Ansprüche 3 oder 4, bei dem das Gehäuse (4) eine Aufnahme (48) für das Bündel und einen Anschlussabschnitt (50) zwischen der Aufnahme (48) und dem Absatz (34) umfasst.

6. Wärmetauscher nach einem der vorhergehenden Ansprüche, umfassend Verstärkungsmittel (58), die es ermöglichen, die Beständigkeit des Gehäuses (4) gegen die Einsetzkräfte zu verbessern.

7. Wärmetauscher nach Anspruch 5, umfassend einen Träger (80), auf dem die Rille (30) aufliegt, wobei der Träger (80) auf dem Gehäuse (4) im Bereich des Anschlussabschnitts (50) liegt.

8. Wärmetauscher nach Anspruch 7, bei dem der Träger (80) einen Bördelrand (82) des Kollektors (20) umfasst, der die Rille (30) mit dem Anschlussabschnitt (50) verbindet.

9. Wärmetauscher nach Anspruch 8, bei dem der Kollektor (20) einen S-förmigen Querschnitt aufweist, umfassend eine erste und eine zweite Schleife, die miteinander materialschlüssig sind, wobei die Rille (30) die erste Schleife des S und der Bördelrand (82) die zweite Schleife des S bildet.

10. Wärmetauscher nach einem der Ansprüche 7 bis 9, bei dem der Träger (80) ferner einen Abschnitt (52) umfasst, der von einem Knick gebildet ist, der sich zwischen dem Absatz (34) und dem Anschlussabschnitt (50) befindet.

11. Wärmetauscher nach einem der vorhergehenden Ansprüche, bei dem der Kollektor (20) Leisten (88) zur mechanischen Verstärkung umfasst.

12. Wärmetauscher nach einem der vorhergehenden Ansprüche, bei dem der Kollektor (20) einen Bildschirm (90) umfasst, der den Strom des ersten Fluids in Richtung einer Wärmetauschzone des Bündels (24) ablenkt.

13. Wärmetauscher nach einem der Ansprüche 8 bis 12, bei dem der Kollektor (20) einen Rahmen, umfassend Winkel, bildet, und der Bördelrand im Bereich aller oder eines Teils der Winkel unterbrochen ist.

14. Anordnung eines Wärmetauschers (1) nach einem der vorhergehenden Ansprüche und eines Eingangskollektorkastens (2) und/oder eines Ausgangskollektorkastens (3), die in den Kollektor (20) eingesetzt sind.

15. Luftansaugmodul, umfassend eine Anordnung nach Anspruch 14.

## Claims

1. Heat exchanger, notably for a motor vehicle, comprising a heat exchange core (24) formed of a stack of plates (60) allowing the circulation of a first and of a second fluid, and a casing (4) inside which the said core (24) is housed, **characterized in that** the said exchanger further comprises a header (20), fixed to the said casing (4), the said exchanger being configured to allow a foot (22) of a header tank (2, 3) to be crimped between the said header (20) and the said casing (4) .

2. Exchanger according to Claim 1, in which the said header (20) comprises a groove (30) able to accommodate a seal (28).

3. Exchanger according to Claim 2, in which the said casing (4) comprises a shoulder (34) in the region of which the said groove (30) is secured.

4. Exchanger according to Claim 3, in which the said shoulder (34) is extended by a crimping edge (42).

5. Exchanger according to either one of Claims 3 and 4, in which the said casing (4) comprises a housing (48) for the core and a connecting portion (50) between the said housing (48) and the said shoulder (34).

6. Exchanger according to any one of the preceding claims, comprising reinforcing means (58) making it possible to improve the ability of the casing (4) to withstand the crimping forces.

7. Exchanger according to Claim 5 comprising a beam (80) against which the said groove (30) bears, the said beam (80) resting on the casing (4) in the region of the said connecting portion (50).

8. Exchanger according to Claim 7, in which the said beam (80) comprises a turned-over edge (82) of the header (20), connecting the said groove (30) to the said connecting portion (50).

9. Exchanger according to Claim 8, in which the said header (20) has an S-shaped cross section comprising a first and a second loop in continuity of material with one another, the said groove (30) forming the first loop of the S and the turned-over edge (82) forming the second loop of the said S.

10. Exchanger according to any one of Claims 7 to 9, in which the said beam (80) further comprises a portion (52) formed by an elbow situated between the said shoulder (34) and the said connecting portion (50).

11. Exchanger according to any one of the preceding claims, in which the header (20) comprises mechanical-reinforcement strips (88).

12. Exchanger according to any one of the preceding claims, in which the header (20) comprises a screen (90) diverting the flow of the first fluid towards a heat-exchange zone of the core (24).

13. Exchanger according to any one of Claims 8 to 12, in which the header (20) forms a frame comprising corners and the said turned-down edge is interrupted at all or some of the said corners.

14. Assembly of an exchanger (1) according to any one of the preceding claims and of an inlet header tank (2) and/or an outlet header tank (3) which are crimped into the said header (20).

15. Air intake module comprising an assembly according to Claim 14.
